Europäisches Patentamt

(19) European Patent Office

Office européen des brevets

(11) Numéro de publication: **0 263 008**
**B1**

(12) **FASCICULE DE BREVET EUROPEEN**

(45) Date de publication du fascicule du brevet:
04.07.90

(21) Numéro de dépôt: **87402035.7**

(22) Date de dépôt: **14.09.87**

(51) Int. Cl.⁵: **F16B 39/10**

(54) **Ensemble réutilisable de freinage d'écrou.**

(30) Priorité: **15.09.86 FR 8612850**

(43) Date de publication de la demande:
**06.04.88 Bulletin 88/14**

(45) Mention de la délivrance du brevet:
**04.07.90 Bulletin 90/27**

(84) Etats contractants désignés:
**BE DE ES GB IT SE**

(56) Documents cités:
**FR-A- 341 135**
**FR-A- 2 025 676**
**US-A- 1 414 188**
**US-A- 1 934 439**
**US-A- 3 022 809**

(73) Titulaire: **AEROSPATIALE Société Nationale
Industrielle, 37, Boulevard de Montmorency,
F-75781 Paris Cédex 16(FR)**

(72) Inventeur: **Mao, Daniel, 65 impasse du Galoubet,
F-13300 Salon de Provence(FR)**
Inventeur: **Declercq, Marc, Vieux Chemin de Lambesc,
F-13330 Pelissane(FR)**

(74) Mandataire: **Barnay, André François, Cabinet
Barnay 80 rue Saint-Lazare, F-75009 Paris(FR)**

## Description

La présente invention est relative à un dispositif de freinage d'écrou.

On connait déjà de nombreux ensembles d'écrous et de rondelles-freins qui ont pour but d'empêcher l'écrou de se desserrer après sa mise en place et son serrage sur un boulon.

FR–A 2 025 676 notamment, décrit un tel ensemble, dans lequel un collier cylindrique comportant des cannelures internes et des dents faisant saillie axialement est enfoncé à force sur le boulon, pardessus l'écrou après serrage de celui-ci.

L'écrou comporte des trous à peu près axiaux adaptés pour recevoir les dents du collier lorsqu'on l'enfonce sur le boulon, celui-ci pouvant présenter également des cannelures correspondant à celles du collier, avec lesquelles elles coopèrent.

Un ensemble de ce type est relativement efficace, mais ne présente cependant pas une sécurité totale. En effet il ne faut pas que le collier remonte sur le boulon en s'éloignant de l'écrou.

Dans ce but les trous du boulon sont percés obliquement en divergeant vers l'extérieur afin de déformer les dents du collier qui est en un métal relativement malléable et, en raison même de cette malléabilité, il existe le risque que les dents puissent sortir des trous du boulon, par exemple sous l'action de fortes vibrations.

Dans d'autres dispositifs connus, décrits par exemple dans US–A 3 022 809, un collier est enfilé sur le boulon, avec lequel il coopère au moyen de cannelures, et est ensuite serti sur l'écrou.

US–A 1 934 439 décrit un ensemble réutilisable de freinage d'écrou sur un boulon comprenant un collier adaptable sur un écrou, présentant un trou avec une saillie interne coopérant avec une cannelure du boulon, et deux pattes élastiques coudées de verrouillage ayant chacune une première branche solidaire dudit collier et une seconde branche dont une extrémité est engagée entre deux des filets du boulon au-dessus dudit collier.

Dans tous ces agencements la tenue du collier repose sur la résistance de celui-ci à la déformation, cette résistance devant dans certains cas permettre de le déformer initialement. Un tel compromis n'est pas absolument fiable et le collier n'est pas récupérable en cas de démontage.

Le but de l'invention est de fournir un ensemble de freinage d'écrou du type précité dans lequel le collier est verrouillé positivement sur le boulon, mais de façon amovible, permettant ainsi un démontage et un ré-emploi de l'ensemble.

L'invention a pour objet à cet effet un ensemble réutilisable de freinage d'écrou sur un boulon, du type décrit dans le préambule de la revendication 1 et présentant les caractéristiques revendiquées dans sa partie caractérisante.

La description qui va suivre, en regard des dessins annexés à titre d'exemple, permettra de bien comprendre comment l'invention peut être mise en pratique.

La figure 1 est une vue en élévation et en coupe partielle d'un écrou vissé sur un boulon et freiné au moyen d'un ensemble suivant l'invention.

Les figures 2 et 3 montrent les deux phases de la mise en place de l'ensemble suivant l'invention sur un écrou vissé sur un boulon.

La figure 4 est une vue en plan de dessus de l'ensemble mis en place et montrant en outre en trait mixte la forme dévelopée d'un organe de verrouillage.

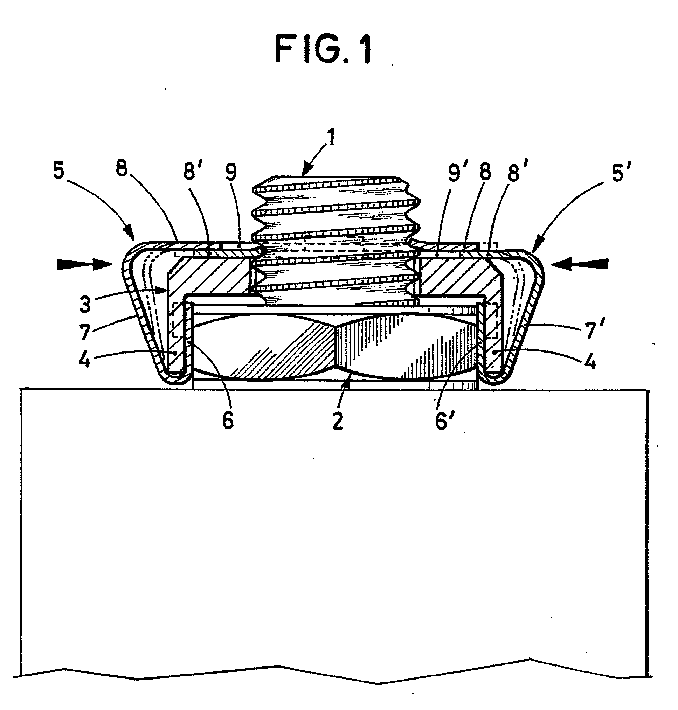

En se référant à la figure 1, on a représenté un boulon 1 sur lequel est vissé un écrou 2 freiné au moyen d'un ensemble suivant l'invention.

Comme connu en soi la tige du boulon comporte des cannelures axiales dans les arêtes de ses filets et un collier 3, dont l'ouverture présente des cannelures correspondantes et comportant deux pattes latérales axiales opposées 4, est enfilé sur le boulon 1 de manière que les pattes 4 chevauchent l'écrou 2 en s'étendant le long de deux pans opposés de celui-ci, réalisant ainsi son verrouillage en rotation.

Suivant l'invention le collier 3 est verrouillé positivement contre tout glissement axial dans les cannelures du boulon 1 au moyen de deux organes élastiques de verrouillage 5, 5' (suivant l'exemple représenté).

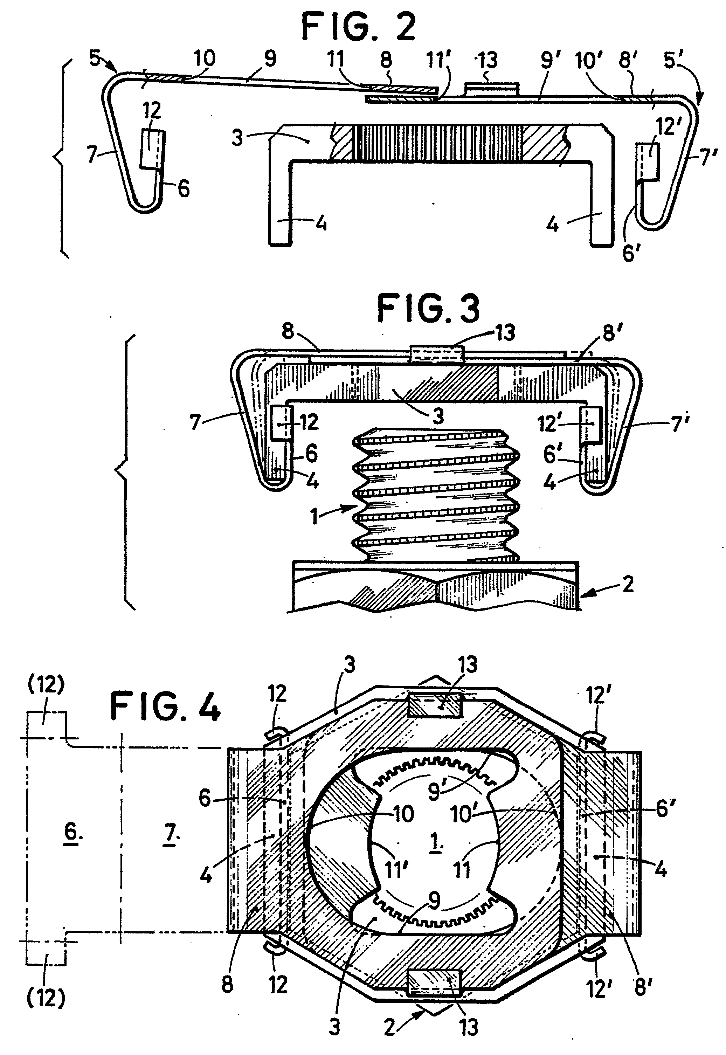

Chaque organe 5, 5' est formé par poinçonnage et pliage d'un feuillard d'acier à ressorts et comporte une première branche 6, 6' courte reliée par un coude à une partie intermédiaire oblique 7, 7' à laquelle est reliée une seconde branche 8, 8' plus longue par un second coude, ces coudes étant tels que les branches 6, 6' et 8, 8' forment entre elles, à l'état non contraint de l'organe 5, 5', un angle légèrement inférieur à 90° (figure 2).

Chaque organe de verrouillage 5, 5', comporte une fenêtre 9, 9' de forme allongée (figure 4) ayant une extrémité arrondie 10, 10', son extrémité opposée 11, 11' au voisinage de l'extrémité de la branche 8, 8' étant incurvée en sens inverse avec un rayon à peu près égal à celui du boulon 1, et la longueur de la fenêtre entre les extrémités 10, 11 et 10', 11' étant nettement supérieure au diamètre du boulon 1, ainsi que sa largeur.

Chaque organe 5, 5' comporte en outre deux oreilles latérales 12, 12' à l'extrémité de la première branche 6, 6', repliées vers la partie intermédiaire 7, 7'.

Suivant l'exemple représenté l'ensemble comprend deux organes de verrouillage 5, 5' et, dans ce cas, le second organe 5' comporte avantageusement sur sa seconde branche 8', la plus longue, deux autres oreilles latérales 13 à peu près au milieu de la longueur de la fenêtre 9' et repliées de façon à s'étendre vers l'intérieur de celle-ci et au-dessus du plan de la branche, en crochets, dans un but qui va être indiqué ci-après.

On décrira maintenant en se référant aux figures 2 à 4 la mise en place et le fonctionnement de l'ensemble suivant l'invention.

Les deux organes de verrouillage 5, 5' sont présentés en sens opposé avec les premières branches 6, 6' parallèles aux pattes latérales 4 du collier 3 de façon à engager celles-ci entre les oreilles 12, 12' et par suite entre les branches 6, 6' et les parties latérales 7, 7' respectivement, les branches 8, 8' se recouvrant partiellement et la branche 8 du premier organe 5 étant introduite entre les oreilles 13 de l'organe 5', en déformant légèrement élastiquement les deux organes.

Les dimensions des branches et des fenêtres sont telles que dans cette position, représentée à la figure 3, les bords 11, 11' des extrémités correspondantes des fenêtres 9, 9' délimitent entre eux une ouverture dont le diamètre est inférieur à celui du boulon 1.

Il suffit alors d'exercer une pression sur les parties intermédiaires 7, 7' des deux organes 5, 5' vers le boulon, comme représenté par des flèches à la figure 1.

En raison de leur élasticité, les deux organes 5, 5' se déforment, les branches 8, 8' glissant l'une sur l'autre en sens inverse, écartant l'un de l'autre les bords 11, 11' des fenêtres et agrandissant ainsi l'ouverture entre eux.

Après serrage précis de l'écrou 2 au couple exact requis par l'assemblage, il suffit alors d'introduire l'ensemble tel que représenté à la figure 3, en partie en trait interrompu, sur le boulon 1 en faisant coïncider ses cannelures avec celles du collier 3.

Les branches 6, 6' sont alors calées entre les pattes 4 du collier, dont l'écartement est prévu de fabrication pour tenir compte de leur épaisseur, et les pans correspondants de l'écrou 2.

Lorsqu'on libère les organes de verrouillage 5, 5' ils reprennent élastiquement leur forme et les bords 11, 11' des fenêtres viennent se verrouiller entre les filets du boulon, s'opposant, par appui sur la face supérieure du collier 3 et coincement, à tout déplacement dudit collier, même sous des efforts importants. Il est à noter qu'un léger jeu entre le collier 3 et le dessus de l'écrou 2 peut résulter d'un verrouillage correct des bords 11 et 11' des organes de verrouillage entre les filets de l'écrou, sans que la qualité de la retenue énoncée précédemment en soit altérée.

On remarquera que la manoeuvre inverse permet de retirer facilement l'ensemble permettant ainsi le desserrage et l'enlèvement de l'écrou.

Aucune pièce n'étant déformée de façon permanente, l'ensemble est ainsi réutilisable.

Les oreilles 12 retiennent les organes de verrouillage sur le collier et les oreilles 13 du second organe maintiennent les deux organes 5, 5' contre tout risque de déplacement.

## Revendications

1. Ensemble réutilisable de freinage d'écrou sur un boulon (1), du type comprenant un collier (3) dont l'ouverture présente des cannelures internes adaptées pour coopérer avec des cannelures complémentaires formées sur le boulon (1), ayant deux pattes latérales (4) s'étendant axialement pour chevaucher l'écrou (2) en contact avec les pans de celui-ci, et au moins un organe élastique coudé (5, 5') de verrouillage, ayant une première branche (6, 6') prenant appui sur l'une des pattes (4) du collier (3) et une seconde branche (8, 8') dont une partie est engagée entre deux des filets du boulon (1), au-dessus du collier (3) et en contact avec celui-ci, caractérisé en ce que l'organe élastique de verrouillage (5, 5') est formé dans un feuillard d'acier à ressorts, sa première branche (6, 6') étant parallèle à l'axe du boulon et calée entre ladite patte (4) du collier (3) et un pan de l'écrou (2), et étant reliée à la seconde branche (8, 8') par une partie intermédiaire (7, 7') assurant l'élasticité de l'organe, la seconde branche (8, 8') de chaque organe de verrouillage (5, 5') comportant une fenêtre allongée (9, 9') de longueur un peu supérieure au diamètre du boulon, à travers laquelle s'étend le boulon (1), à peu près perpendiculairement à ladite branche (8, 8') et étant montée coulissante par rapport au collier (3), et en ce que à l'état non contraint de l'organe de verrouillage ladite partie de la seconde branche (8, 8') engagée entre les filets du boulon s'étend partiellement en travers de l'ouverture du collier (3).

2. Ensemble suivant la revendication 1, caractérisé en ce qu'il comprend un organe de verrouillage (5, 5') associé à chacune des pattes (4) du collier (3).

3. Ensemble suivant la revendication 1, caractérisé en ce que la partie de la seconde branche (8, 8') engagée entre les filets du boulon (1) est l'un des côtés de ladite fenêtre (9, 9').

4. Ensemble suivant l'une quelconque des revendications 1 à 3, caractérisé en ce que la première branche (6, 6') de chaque organe de verrouillage (5, 5') comporte des moyens (12, 12') de retenue de la patte (4) associée dudit collier (3).

5. Ensemble suivant la revendication 1, caractérisé en ce que la seconde branche (8, 8') de l'un desdits organes (5, 5') comporte des moyens (13) de retenue de la seconde branche de l'autre organe.

## Patentansprüche

1. Mehrfach verwendbare Sicherungsvorrichtung für eine Mutter auf einem Schraubenbolzen (1), mit einem Ringflansch (3), dessen Öffnung mit einer innenseitigen Riffelung versehen ist, die so bemessen ist, daß sie mit einer komplementären Riffelung auf dem Schraubenbolzen (1) zusammenwirkt, und der zwei seitliche, sich axial erstreckende Klauen (4) aufweist, die die Mutter (2) übergreifen und deren Seitenflächen berühren, und mit wenigstens einem elastischen, abgewinkelten Verriegelungsteil (5, 5'), das einen ersten Schenkel (6, 6') aufweist, der sich an einer der Klauen (4) des Ringflansches abstützt, sowie einen zweiten Schenkel (8, 8'), dessen einer Teil oberhalb des Ringflansches (3) und mit diesem in Verbindung stehend zwischen zwei der Gewindegänge des Schraubbolzens (1) greift, dadurch gekennzeichnet, daß das elastische Verriegelungsteil (5, 5') von einem federnden Stahlband gebildet ist, dessen erster Schenkel (6, 6') parallel zur Achse des Schraubenbolzens und zwischen der Klaue (4) des Ringflansches (3) und der Seitenfläche der Mutter (2) eingeklemmt ist und mit dem zweiten Schenkel (8, 8') über ein Zwischenteil (7, 7') verbunden ist, das dem Teil die Elastizität verleiht, wobei der zweite Schenkel (8, 8') eines jeden Verriegelungsteils (5, 5') mit einem länglichen Fenster (9, 9') versehen ist, dessen Länge geringfügig größer ist als der Durchmesser des Schraubbolzens und durch das hindurch sich der Schraubbolzen (1) ungefähr senkrecht zu dem Schenkel (8, 8') erstreckt, und verschiebbar gegenüber dem Ringflansch (3) angeordnet ist, und daß bei nicht belastetem Zustand des Verriegelungsteils der in die Gewindegänge des Schraubbolzens eingreifende Teil des zweiten Schenkels (8, 8') sich teilweise quer über die Öffnung des Ringflansches (3) erstreckt.

2. Sicherungsvorrichtung nach Anspruch 1, dadurch gekennzeichnet, daß sie ein Verriegelungsteil (5, 5') für jede der Klauen (4) des Ringflansches (3) aufweist.

3. Sicherungsvorrichtung nach Anspruch 1, dadurch gekennzeichnet, daß der in die Gewindegänge des Schraubbolzens (1) greifende Teil des zweiten Schenkels (8, 8') eine der Seiten des Fensters (9, 9') ist.

4. Sicherungsvorrichtung nach einem der Ansprüche 1 bis 3, dadurch gekennzeichnet, daß der erste Schenkel (6, 6') jedes Verriegelungsteils (5, 5) mit Haltemitteln (12, 12') für die mit dem Ringflansch (3) verbundenen Klauen (4) versehen ist.

5. Sicherungsvorrichtung nach Anspruch 1, dadurch gekennzeichnet, daß der zweite Schenkel (8, 8') eines der Verriegelungsteile (5, 5') mit Haltemitteln (13) für den zweiten Schenkel des anderen Verriegelungsteils versehen ist.

**Claims**

1. Re-usable assembly for locking a nut on to a bolt (1), of the type comprising a collar (3) whose aperture has internal flutings adapted to cooperate with complementary flutings formed on the bolt (1), having two lateral legs (4) extending axially to overlap the nut (2) by contact with the faces of the latter, and at least one elastic angled locking member (5, 5') having a first arm (6, 6') supported against one of the legs (4) of the collar (3) and a second arm (8, 8') having one part engaged between two of the threads of the bolt (1), above the collar (3) and in contact with the collar, characterised in that the elastic locking member (5, 5') comprises a steel leaf spring member, its first arm (6, 6') being parallel to the axis of the bolt and wedged between the said leg (4) of the collar (3) and a face of the nut (2), and being connected to the second arm (8, 8') by an intermediate portion (7, 7') ensuring the elasticity of the member, the second arm (8, 8') of each locking member (5, 5') having an elongate aperture (9, 9') having a length slightly greater than the diameter of the bolt and through which the bolt (1) extends substantially perpendicular to the said arm (8, 8') and the second arm being mounted slidingly for support on the collar (3), and in that when the locking member is not under constraint the said one part of the second arm (8, 8') which is arranged to engage between the threads of the bolt extending partially across the aperture in the collar (3).

2. Assembly according to claim 1, characterised in that a locking member (5, 5') is associated with each of the legs (4) of the collar (3).

3. Assembly according to claim 1, characterised in that said one part of the second arm (8, 8') engageable between the threads of the bolt (1) is one of the sides of the said aperture (9, 9').

4. Assembly according to any one of the claims 1 to 3, characterised in that the first arm (6, 6') of each locking member (5, 5') comprises means (12, 12') for retaining the leg (4) associated with the said collar (3).

5. Assembly according to claim 1, characterised in that the second arm (8, 8') of one of the said locking members (5, 5') comprises means (13) for holding the second arm of the other member.

EP 0 263 008 B1

# FIG.1

# FIG. 2

# FIG. 3

# FIG. 4